# EUROPEAN PATENT SPECIFICATION

(11) **EP 1 286 822 B1**
(45) Date of publication and mention of the grant of the patent: **10.11.2004**
(21) Application number: 00963138.3
(22) Date of filing: 07.09.2000
(51) Int. Cl.: B29C 67/00

(54) **IMPROVED FDM METHOD AND APPARATUS**
FDM-VERFAHREN UND VORRICHTUNG
PROCEDE ET APPAREIL POUR FABRIQUE UN OBJET A TROIS DIMENSIONS PAR DEPOT DE MATIERE FONDUE

(30) Priority: 19.05.2000 WO PCT/NL00/00345
(43) Date of publication of application: 05.03.2003
(73) Proprietor: Nederlandse Organisatie voor Toegepast-Natuurwetenschappelijk Onderzoek TNO, 2628 VK Delft (NL)
(72) Inventor: FEENSTRA, Frits, Kornelis, NL-2642 DR Pijnacker (NL); FINKE, Steffi, 39326 Wolmirstedt (DE)
(74) Representative: Prins, Adrianus Willem, Mr. Ir.
(86) International application number: PCT/NL2000/000630
(87) International publication number: WO 2001/089814

(56) References cited:
- EP-A- 0 833 237
- US-A- 6 030 199

## Description

The invention relates to a method of making a three-dimensional physical object, wherein strands of solidifying material are liquified and the liquified material is deposited in a stack of planar layers according to the preamble of claim 1 and to an apparatus for making three-dimensional physical objects by means of the Fused Deposition Modelling (FDM) technique.

Fused Deposition Modelling (FDM) is used for making three-dimensional physical objects from strands of solidifying material. In the FDM technique, solid strands of solidifying material are liquified and the liquified material is deposited in repeated layers wherein the material solidifies until a three-dimensional object is formed. The solidified material is deposited in liquified state within a layer as at least one road or track in which the material solidifies. The solidifying material may comprise various types of materials, e.g. thermoplastic material, (filled) waxes or metal.

In this context, a solidifying material is meant to at least comprise a material that solidifies from a relatively liquid state into a relatively solid state upon cooling, e.g. a thermoplastic material that solidifies upon cooling down from a plastic state when cooling down to below its glass transition temperature.

A three-dimensional physical object manufactured by means of the FDM technique generally comprises a stack of superimposed planar layers of solidified material, each layer comprising a number of roads of deposited material extending along a road axis within the layer and having a road cross section extending perpendicularly to the road axis.

An apparatus for making such three-dimensional physical objects by means of the FDM technique generally comprises a dispensing head comprising an annular passage, extending from a receiving inlet for receiving strands of solid material to a dispensing outlet for dispensing the material in a liquified state, heating means, operatively associated with the annular passage to form a liquifying zone for liquifying material in the annular passage, located between the receiving inlet and the dispensing outlet and drive means for driving material through the annular passage by engagement of the strands of solid material. The apparatus further comprises means for supplying solid strands of solidifying material to the receiving inlet of the dispensing head, a base member disposed in working proximity to the dispensing outlet of the dispensing head, moving means for moving the dispensing head and the base member relative to each other in three dimensions and control means for controlling the moving means and the driving means, such that the dispensing head can move relative to the base member in three dimensions in a predetermined sequence and pattern and that the drive means can drive the strands of solid material through the annular passage, such that the material is dispensed in roads in a liquified state from the dispensing outlet in a predetermined rate onto the base member, so as to form a three-dimensional product from deposited roads.

Such product, method and apparatus are known from e.g. EP 0 833 237 to Stratasys Inc. 1

EP0 833 237 discloses a method for creating three-dimensional physical objects according to the preamble of claim 1, wherein the road cross section is varied by varying the height of the road cross section, i.e. the step height, to form a sloped or inclined product surface with greater detail.

US6 030 199 discloses an apparatus and method for creating three-dimensional objects by planar deposition of molten material from pressurized containers through a nozzle having a variable slit to vary the widths of deposited sheets of material.

The FDM technique is generally used to create a three-dimensional physical model or prototype, wherein the layers extend in the X-Y plane of a cartesian coordinate system and the layers are stacked in the Z-direction of the cartesian coordinate system.

A problem associated with the FDM technique is that the properties of the model do not always correspond closely enough to the original object on which it was modelled or, in case of a prototype, to the end product.

In particular, the layered structure causes problems in providing a product which can be manufactured in an economical way and which has a sufficiently high resolution. With the known technique, sloping or slightly curved areas extending at a small angle to the X-Y plane have a step-like appearance. In addition, thin-walled sections extending in Z-direction are limited in dimension in the X-Y plane, as they need to be filled in by hatching the inside of the perimeter of the geometry or can only be formed by depositing only the perimeter of the geometry.

Furthermore, with the known FDM technique, only a few modelling materials can be processed.

It is therefore an object of the invention to alleviate the above-mentioned drawbacks of the FDM technique by improving the physical object, the method and the apparatus.

According to a first aspect of the invention, a method of making a three-dimensional physical object is provided as set out in claim 1.

By varying the width of the road cross section in a direction parallel to the plane along the road axis, it is achieved that a thin-walled section can be filled in by adjacent roads without the need to provide hatches between roads defining an outer contour. A thin-walled section can now e.g. be formed by two adjacent roads which define the outer contour, also named perimeter, of the section in an X-Y layer and which have sufficient width to fill the area enclosed by the contour. Such a section may also comprise one or more interposed roads extending substantially parallel or congruent to the outer contour.

By varying the height of the road cross section measured in a direction perpendicular to the plane between layers within a product, it is achieved that curves and slopes in the X-Y plane can have a lesser step-appearance. In particular, by decreasing the height between subsequent layers in Z-direction, i.e. the step height, where consecutive layers form a product surface that extends at a small angle to the X-Y plane, the sloped or inclined product surface can be formed with greater detail. Between other layers, the step height can then be chosen at a larger default setting, thus increasing the speed of manufacture of the product.

According to a second aspect of the invention, an apparatus for making three-dimensional physical objects by means of the Fused Deposition Modelling (FDM) technique is provided, comprising a dispensing head comprising an annular passage, extending from a receiving inlet for receiving strands of solid material to a dispensing outlet for dispensing the material in a liquified state, heating means, operatively associated with the annular passage to form a liquifying zone for liquifying material in the annular passage, located between the receiving inlet and the dispensing outlet and drive means for driving material through the annular passage by engagement of the strands of solid material, the apparatus further comprising means for supplying solid strands of solidifying material to the receiving inlet of the dispensing head, a base member disposed in working proximity to the dispensing outlet of the dispensing head, moving means for moving the dispensing head and the base member relative to each other in three dimensions and control means for controlling the moving means and the driving means, such that the dispensing head can move relative to the base member in three dimensions in a predetermined sequence and pattern and that the drive means can drive the strands of solid material through the annular passage, such that the material is dispensed in roads in a liquified state from the dispensing outlet in a predetermined rate, so as to form a three-dimensional product from deposited roads, the dispensing head of the apparatus having a flat smear surface for varying the width of a deposited road extending around the dispensing outlet substantially transversely to the central axis of the annular passage.

Particular embodiments of the invention are the subject of the respective dependent claims.

By providing the dispensing head of the FDM apparatus with a flat smear surface extending substantially transversely, preferably perpendicularly to a central axis of the annular passage, it is achieved that smooth, extra wide roads can be formed. By providing the apparatus with a brush, the smear surface can be cleaned relatively easily. Preferably, the brush is located in working proximity of the dispensing head and is provided with bristles forming the hairs of the brush extending substantially transversely, preferably perpendicularly to the smear surface. To reduce the chance of contamination of the brush, a cutter is preferably placed near the brush, such that it can cut strands of material extending through the outlet opening or depending from the smear surface.

In particular, the cutter can comprise a comb-like structure having narrowing slots which lie in or slightly below a plane in which the tops of the bristles are located.

According to an example, a method of making a three-dimensional physical object is provided, wherein strands of solidifying material are liquified and the liquified material is deposited in at least two stacks of planar layers, each layer being built up by depositing the liquified material in at least one road wherein the material solidifies, the stacks including at least one product stack forming a product and at least one support stack for at least partially supporting the product, the material being deposited such that, in a stacking direction, corresponding layers of the product stack and the support stack are deposited in the same plane and in which method at least one layer of the support stack is deposited in a plane that is offset in stacking direction relative to its corresponding layer of the support stack.

By providing at least one layer of the support stack that is offset in stacking direction relative to its corresponding layer of the product stack, it is achieved that the top faces of the product stack and the support stack lie in different planes, such that a layer that is deposited subsequently to extend over both top faces will bond less closely to the stack of which the top face has a lesser height in stacking direction. This way, separation of the product and the support structure can be facilitated. This is particularly relevant in view of the fact that many materials used in the FDM technique tend to bond tightly. By depositing corresponding layers of two stacks in planes that are offset in stacking direction, it is possible to use the same type of material for the product and its support structure. This way, the need for changing the strand material of the nozzle from support material to product material is obviated.

In addition, a further example provides for an apparatus for making three-dimensional physical objects, comprising a first dispensing head comprising a first annular passage, extending from a first receiving inlet for receiving strands of solid material to a first dispensing outlet for dispensing the material in a liquified state, first heating means, operatively associated with the first annular passage to form a liquifying zone for liquifying material in the first annular passage, located between the first receiving inlet and the first dispensing outlet and first drive means for driving material through the annular passage by engagement of the strands of solid material, further comprising a second dispensing head comprising a second annular passage, extending from a second receiving inlet for receiving strands of solid material to a second dispensing outlet for dispensing the material in a liquified state, second heating means, operatively associated with the second annular passage to form a liquifying zone for liquifying material in the second annular passage, located between the second receiving inlet and the second dispensing outlet and second drive means for driving material through the second annular passage by engagement of the strands of solid material, the first dispensing head being movably disposed relative to the second dispensing head and being operatively connected to a control means, such that during manufacture of the product, between or during depositing layers, in response to the control means, the dispensing heads can be moved relative to each other from a first position in which the first and second dispensing outlets lie in the same plane, and a second position wherein the first and second dispensing outlets of the dispensing heads lie in planes that are offset relative to each other.

Preferably, the first and the second dispensing heads are disposed with a central axes of their annular passages extending substantially parallel and can be adjusted relatively to each other along the central axis, e.g. by a motor that is controlled by controlling means of the apparatus.

It has been found that strands of nylon offer many advantages when they are used in the FDM technique as solid strands of solidifying material to be liquified and deposited in roads. In particular, nylon is relatively cheap, and remains stable, even when the temperature of the environment surrounding the physical object made by the FDM technique is relatively high. This is particularly important in view of the fact that many modelling materials are deposited in liquified form in a working chamber of which the temperature is kept or preferably close under the glass transition temperature, e.g. 5-30° lower, in order to enable stress relaxation to prevent (stress induced) warpage and shrinkage and that many modelling materials have a relatively high glass transition temperature, e.g. polycarbonate (PC), polyethersulphone (PES), polysulphone (PSU).

In addition, it has been found that even under high temperature conditions, a support containing nylon can be separated relatively easily from the modelled product without damaging the product.

In order to be processed by means of the FDM technique, a strand of material preferably has a constant cross sectional shape and area and may be wound as a continous filament on a spool.

Although advantageous results can be achieved with nylon materials containing many types of polyamide, strands of material containing PA6 and/or PA6.6 have been proven very effective. The material Akulon K223-HM6 and S223-HM8 have been tested to have excellent results.

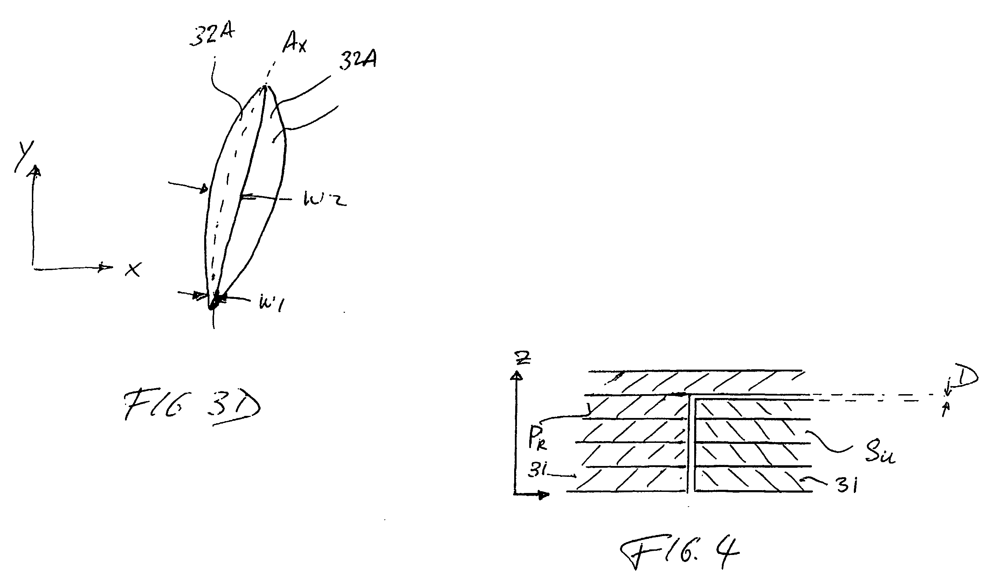

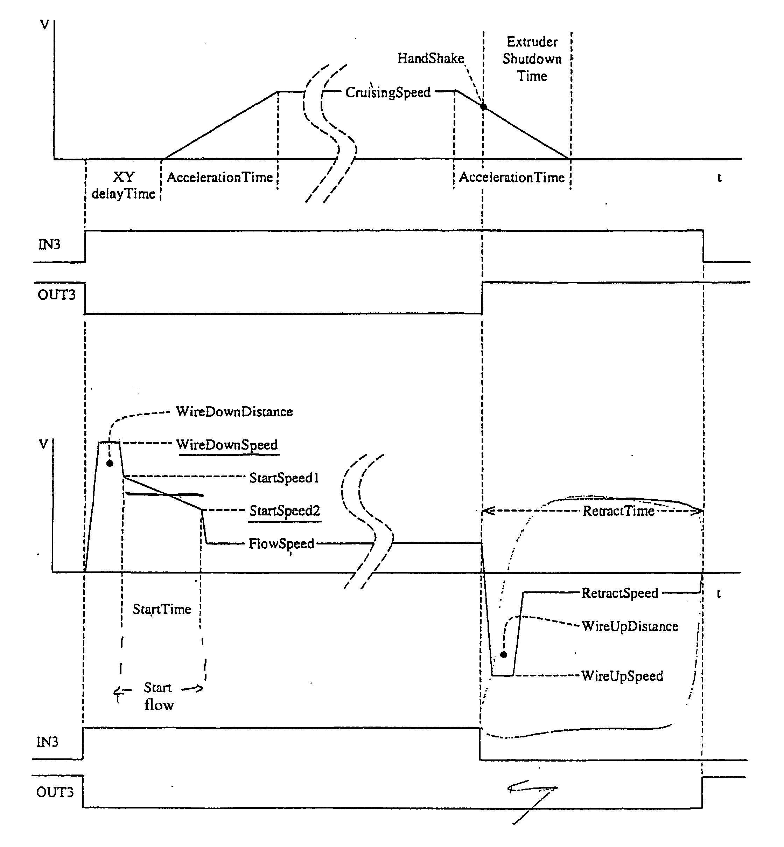

The FDM method may comprise a calibrating step to calibrate the control means of the FDM apparatus to the properties of a new strand material. The calibrating step involves dispensing a road of liquified solidifying material along a predetermined path, comparing the path along which the road has been dispensed with a desired path and subsequently adapting at least one of a set of control parameters, chosen from the set comprising: cruising speed, flow speed (cruising flow), start flow. Preferably, the start flow is adjusted by adjusting the wire down speed, i.e. the velocity with which the strand is fed through the annular passage, the wire down distance, the start speeds 1 and 2, and the start time, as defined in fig. 5.

In this context, the cruising speed is meant to comprise the speed at which the road is dispensed along its axis after relative acceleration between the outlet opening of the dispensing head and the base member to a constant working speed. Further, in this context, the flow speed (cruising flow) is meant to comprise the flow of liquified material from the dispensing outlet at the above defined constant working speed. In addition, in this context, the start flow is meant to comprise the flow of liquified material from the dispensing outlet during the time before the cruising speed has been reached. The material parameter settings are dependent on the layer thickness.

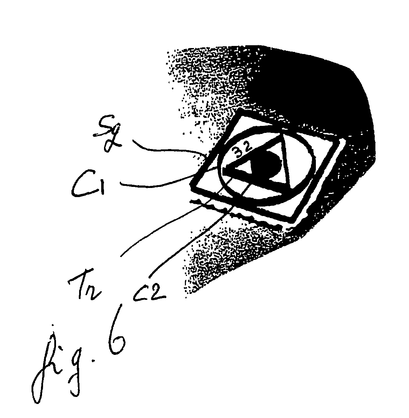

Using the calibrating step, a person skilled in the art is able to set the above-mentioned parameters for a new material to obtain a desired deposition process, in particular including start and stop of flow as desired. In particular, the desired path includes a number of geometrical figures, e.g. a circle C1 drawn within a square Sq, and a triangle Tr drawn within the circle C1 and a further circle C2 or disk drawn with the triangle Tr. Preferably, the boundaries of the geometrical figure are tangent to each other as shown in fig. 6. It shall be clear that the calibrating method can be used advantageously with many different types of FDM apparatuses.

The invention will be further elucidated using an example shown in a drawing. In the drawing
fig. 1 shows a perspective view of a dispensing head;
fig. 2 shows a perspective view of an apparatus for making three-dimensional physical objects using the FDM technique;
fig. 3A shows a perspective view of the physical object;
fig. 3B shows a cross sectional view of the object of fig. 3A in the X-Z plane;
fig. 3C shows a section of a road of the object of fig. 3A on an enlarged scale;
fig. 3D shows roads having varying width;
fig. 4 shows a cross sectional view in the X-Z plane of a three-dimensional object comprising a stack of product layers and a stack of support layers;
fig. 5 shows the speed of the dispensing head and the speed of the wire through the dispensing head as an example; and
fig. 6 shows an example of a test geometry for calibrating the FDM apparatus to strands of a new material.

The drawings are schematical representations and only serve as non-limiting elucidations of a preferred embodiment of the invention. In the drawings, identical or corresponding parts are denoted with the same reference numerals.

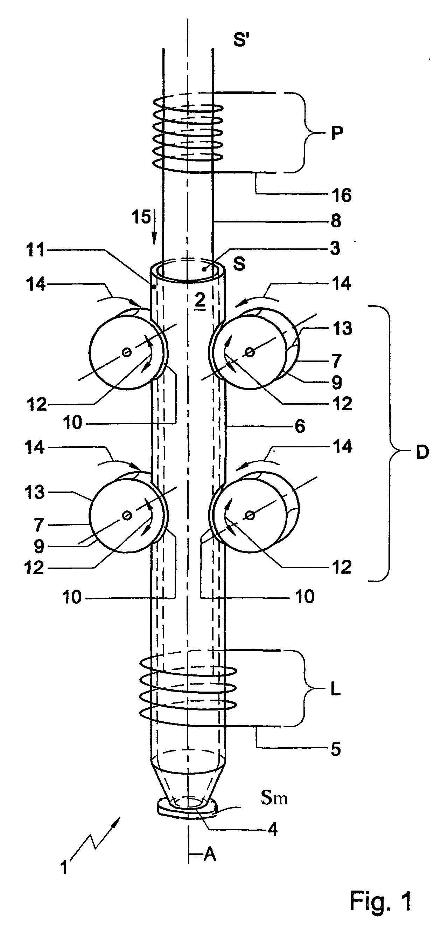

Fig. 1 shows a dispensing head for an apparatus for making three-dimensional physical objects of predetermined shape by sequentially depositing multiple layers of solidifying material on a base member.

The dispensing head 1 comprises an annular passage 2 in the form of a canal with a circular cross section. The annular passage 2 extends from a receiving inlet 3 to a dispensing outlet 4. The dispensing head 1 further comprises heating means 5, shown as a coil of wire forming an electrical resistance heater. The coil is wrapped around the thin-walled tubular member 6 to form a liquifying zone L, located between the receiving inlet 3 and the dispensing outlet 4 of the annular passage 2. The dispensing head 1 further comprises drive means 7 for driving material through the annular passage 2. The drive means 7 are integrated in the annular passage 2, such that they can engage the strands 8 of solid material in a driving zone D located between the receiving inlet 3 and the liquifying zone L of the annular passage 2.

In particular, the drive means 7 comprise drive elements, in the form of drive wheels 9, that reach through corresponding apertures 10 in the wall 11 of the tubular member 6. At the apertures, the wall 11 of the annular passage 2 sealingly surrounds the drive wheels 9.

The drive wheels 9 are disposed to reach with a part of their circumference through the apertures 10 in the wall 11 of the annular passage, such that, in each rotational position of a drive wheel, a portion 12 of the tread surface 13 of the drive wheel extends in the passage 2. At any rotational position, a portion 12 of the tread surface 13 is integrated with the wall 11 of the annular passage 2 and is used to engage a strand 8 inserted through the receiving inlet 3 and extending into the annular passage 2 at its circumference. To enhance friction between the tread surface 13 of the drive wheels 9 and the strand 8, the tread surface is provided with a profile, e.g. an hatched or knurled profile.

The drive wheels 9 are juxtaposed in radially opposite pairs relative to the central axis A of the annular passage 2. In the drawing, two pairs of juxtaposed drive wheels are shown that are axially distributed in the drive zone. To prevent any slippage, the drive wheels may be rotationally coupled. The drive wheels are made of metal, preferably hardened steel. The tread surface 13 may be slightly convex to improve cooperation with the cilindrical outer surface of the strand 8.

In operation, a strand 8 is inserted into the annular passage 2 through the receiving inlet 3. By rotation of the drive wheels 9 in the direction of arrows 14, the circumference of the strand 8 is engaged to be driven by the portions 12 of the tread surfaces 13 of the drive wheels 9 that reach through the apertures 10 in the wall 11 of the tubular member 6. This way, the strand 8 is transported in a processing direction indicated with an arrow 15 towards the liquifying zone L. In the liquifying zone the solid strand 8 is liquified. Under piston action of the solid portion of the strand 8, the liquified strand material is subsequently forced through the remaining portion of the annular passage 2 where it is dispensed through the dispensing outlet 4, such that the material can be deposited within stacks of repeated layers as roads or tracks in which the material solidifies.

Preheating means 16, shown as an electrical wire resistance heater, are provided in a preheating zone P located on an input side S of the drive zone D. This way, a strand 8 to be processed can be preheated to have the proper phase and/or temperature for processing.

With the dispensing head, strands of numerous materials can be processed, including: PA (polyamide), polyesther (PET,PBT), poly-buthene-terephtalate (PBTP), poly-ethene-terephtalate (PETP), polycarbonate (PC), acrylonitrile-butadiene-styrene copolymer (ABS), acrylonitrile styrene acrylic copolymer (ASA), Styrene acrylonitrile copolymer (SAN), polyacetal (POM), cellulose acetate (CA), polymethyl-methacrylate (PMMA), modified polyphenyloxide (PPO), polyphenylenesulfide (PPS), polysulphone (PSO), polytetrafluorethylene (PTFE), Polyethersulphone (PES), polyether-ether-ketone (PEEK), polymethylpentene (PMP), polyphenylether+polystyrene (PPE/PS), polyimide (PI), polyetherimide (PEI), polyvinylchloride (PVC), polystyrene (PS), polyolefins (PE, PP), polyvinylydenefluoride (PVDF), tetrafluorethene-ethene copolymer (ETFE), watersoluble polymers: polyacrylamide (PAA), polyethylene oxide (PEO), biopolymers, thermoplastic elastomers: polyesther, polyether or polyolefin based bloc copolymers (SBS, Hytrel, Arnitel), above polymers in unfilled, inert filled or grafted grades (fillers such as glass, minerals, fibres, grafted with maleic acid etcetera) and semi solid metals. The strands may be composed, e.g. be built up of different filaments or coaxial layers.

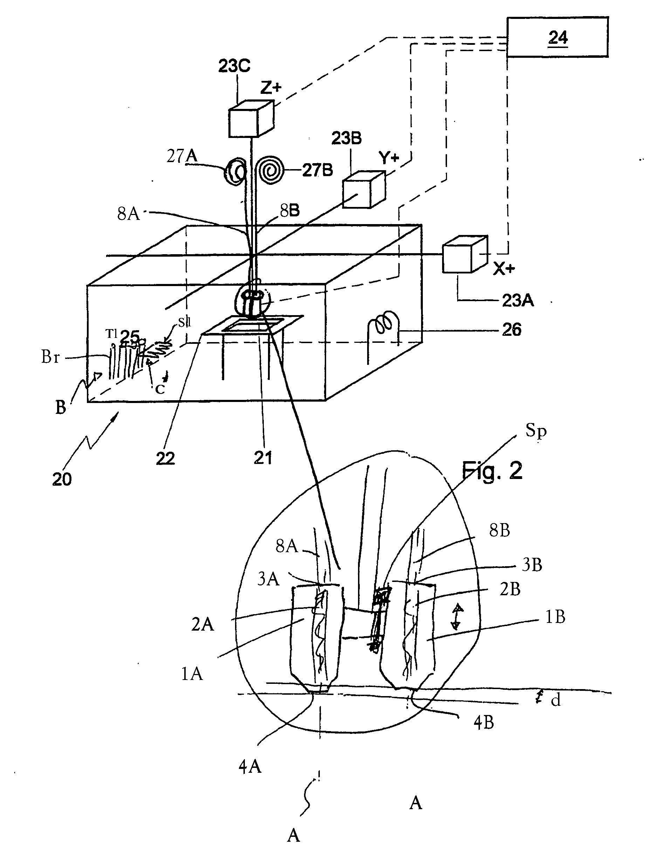

Referring to fig. 2, an apparatus 20 is shown for making three-dimensional physical objects 21 of a predetermined shape by sequentially depositing multiple layers of solidifying material on a base member. The apparatus 20 comprises two dispensing heads 1 of fig. 1, a first dispensing head 1A and a second dispensing head 1B, and means for supplying strands 8A, 8B of solidifying material to the receiving inlet of the dispensing heads 1A, 1B, shown as filament spools 27A, 27B on which strands 8A,8B are wound. The apparatus 20 further comprises a base member 22 disposed in working proximity to the dispensing outlets 3A, 3B of the dispensing heads 1A, 1B and means for moving the dispensing heads 1A, 1B and the base member 22 relative to each other in three dimensions. The means for moving the dispensing heads are shown as linear drives 23A, 23B and 23C in which the dispensing heads 1A, 1B can be moved in the X, Y and Z direction respectively.

As is shown in detail in fig. 2, the dispensing heads 1A, 1B are movably disposed relative to each other, such that they can be moved between a first position I in which the dispensing outlets 4A, 4B lie in the same plane to a second position II (shown) in which the first and second outlets 4A, 4B lie in parallel planes that, in Z-direction, are a distance d offset relative to each other. The central axes A of the annular passages 2A, 2B extend parallel to each other in Z-direction and the heads 1A, 1B can be moved relative to each other by means of a motor driven spindle Sp such that at least one head, e.g. the second head 1B, is moved along its central axis A.

The apparatus 20 further comprises control means 24, e.g. a computer, for controlling the linear drives 23 and the drive means 7 of the dispensing heads 1A, 1B, such that the dispensing heads 1A, 1B can move relative to the base member 22 in three dimensions in a predetermined sequence and pattern with respect to the dispensing outlets 3A, 3B of the dispensing head 1 and the strand 8 of solid material can be driven through the annular passage 2 of the dispensing head, such that a solidifying material is dispensed in a liquified state from the dispensing outlet in a predetermined rate onto the base member, so as to thus form a three-dimensional object.

The constructional details and workings of the dispensing head and the apparatus are known to the skilled man and are e.g. discussed in EP 0 833 237 to Stratasys Inc.

The base member 22 is preferably disposed in a working chamber 25 having a controlled atmosphere. In particular, the working chamber 25 may contain a neutral gas environment which is particularly useful when strands of material are processed that are prone to contamination, degradation or crystallisation, e.g. strands containing metal. Furthermore, the temperature of the environment in the working chamber 25 may be controlled, e.g. using a heater 26. To enable processing of strands of material having a high liquifying temperature, it is observed that the temperature of the working area should be kept at or preferably closely under the glass transition temperature, e.g. 5-30°C lower in order to enable stress relaxation to prevent (stress induced) warpage and shrinkage.

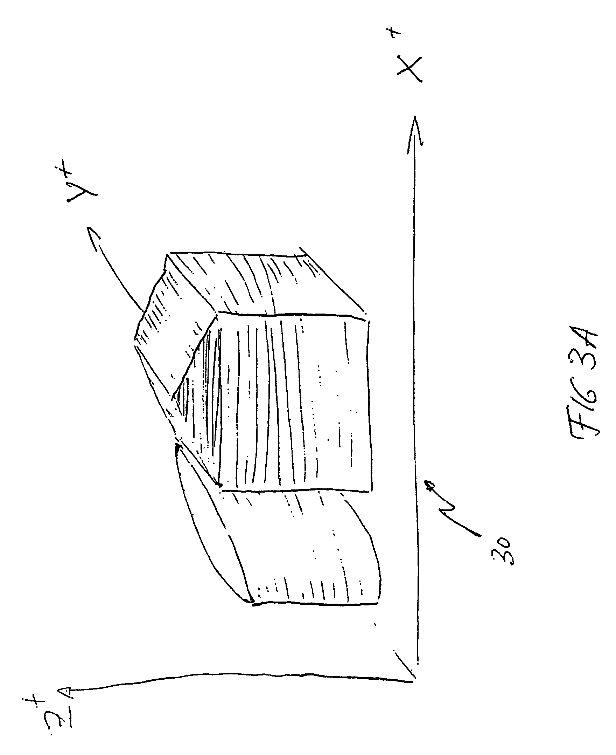

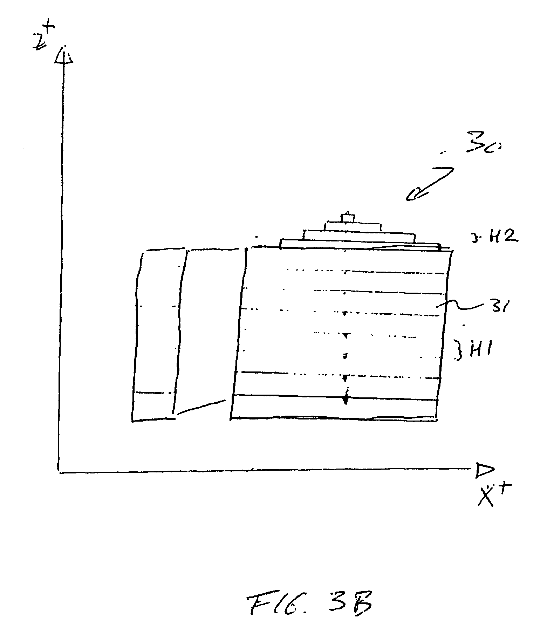

Referring to figs. 3, a show a three-dimensional physical object 30 made by the FDM technique is shown.

In particular, fig. 3A shows a perspective view of the object 30, while fig. 3B shows a cross-sectional view in the XZ-plane.

The three-dimensional object 30 comprises a stack of superimposed, planar layers 31. Each layer 31 comprises a number of roads 32 of solidified, deposited material. A section of a road has been shown on an enlarged scale in fig. 3C. Each road 32 extends along a road axis Ax and has a road cross section 33 extending perpendicularly to the road axis Ax.

The three-dimensional physical object 30 is formed by liquifying solid strands 8 of solidifying material in a dispensing head 1 of the FDM apparatus and by depositing the liquified material in a stack of planar layers 31, each layer being built up by depositing the liquified material in at least one road wherein the material solidifies.

By varying the road cross section in shape and/or area within the object 30, the resolution of the object can be greatly increased, without significantly increasing the total time needed to manufacture the product.

In particular, by varying the height H of the road cross section 33 measured in a direction perpendicular to the plane, i.e. in Z- or stacking direction, it is achieved that curves and slopes extending at small angles relative to the XY plane can have a lesser step-appearance. By decreasing the height between subsequent layers in Z direction, (the step height), where consecutive layers form a product surface that extends at a small angle to the X-Y plane, the sloped or inclined product surface can be formed with greater detail. In fig. 3B this is shown by a first set of layers in the stack having a height H1 and a second set of layers having a height H2.

By varying the width W of the road cross section in a direction parallel to the plane over its road axis Ax it is achieved that a thin-walled section can be formed by two adjacent roads which define the outer contour of the section in an X-Y layer, which roads 32 have sufficient width to fill the area enclosed by the contour. As is shown in fig. 3D, the roads 32A each have a width W that in the XY plane varies along the road axis Ax from a first value W1 to a second value W2.

Again referring to fig. 1, it is shown that the dispensing head 1 is provided with a flat smear surface Sm extending around the dispensing outlet 4 substantially transversely to the axis A of the annular passage 2. By means of the smear surface Sm, roads 32 can be formed having a relatively great width.

Referring to fig. 2, the smear surface Sm can be cleaned with a brush B located in working proximity of the dispensing head 1 and that is provided with bristles Br extending perpendicularly to the smear surface Sm. A cutter C is provided to cut strands of liquified or (partially) solidified material extending through the dispensing outlet 4 or from the smear surface Sm, such that contamination of the brush B can be reduced. The cutter C comprises a comb-like structure, having narrowing slots Sl between teeth of the comb which lie slightly below a plane in which the tops T of the bristles Br are located. The smear surface Sm can be cleaned by moving the dispensing head 1 with its dispensing outlet 4 over the cutter C, such that the tops T of the bristles Br can engage the smear surface Sm in a cleaning action.

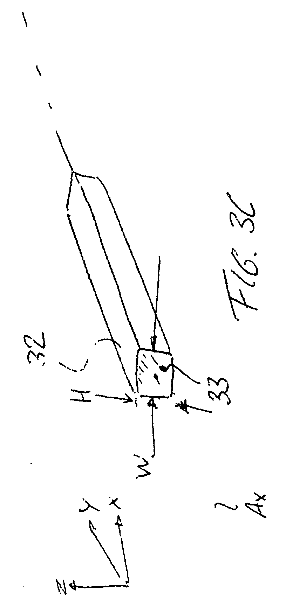

Referring to fig. 4 it is shown that the strands of liquified solidifying material can be deposited in two stacks of planar layers, a product stack Pr forming a product and a support stack Su forming a support for (parts of) the product. By providing at least one layer of the support stack Su that is offset over a distance D in stacking or Z-direction relative to its corresponding layer of the product stack Pr, it is achieved that the top faces of the product stack Pr and the support stack Su lie in different planes. A product layer that is deposited subsequently to extend over both top faces will now bond less closely to the top face of the support stack Su.

It shall further be clear that the invention is not limited to the specific embodiments described herein and that many variations are possible within the scope of the appended claims.

## Claims

1. A method of making a three-dimensional physical object (30), wherein strands (8) of solidifying material are liquified and the liquified material is deposited in a stack of planar layers (31), each layer (31) being built up by depositing by the liquified material in at least one road (32) wherein the material solidifies, each road (32) being deposited along a road axis (Ax) within the layer and having a road cross section (33) extending perpendicularly to the road axis (Ax), the road cross section (33) being varied within the physical object (30), **characterized in that** the width (W) of the road cross section (33) in a direction parallel to the plane of at least one road (32) is varied along the road axis (Ax) using a smear surface (Sm).

2. A method according to claim 1, wherein the height (H) of the road cross section in a direction perpendicular to the layers (31) is varied between layers (31) within the physical object (30).

3. An apparatus (20) for making three-dimensional physical objects (30) by means of the Fused Deposition Modelling (FDM) technique comprising a dispensing head (1) comprising an annular passage (2), extending from a receiving inlet (3) for receiving strands (8) of solid material to a dispensing outlet (4) for dispensing the material in a liquified state, heating means (5), operatively associated with the annular passage (2) to form a liquifying zone (Z) for liquifying material in the annular passage (2), located between the receiving inlet (3) and the dispensing outlet (4) and drive means (7) for driving material through the annular passage (2) by engagement of the strands (8) of solid material, the apparatus further comprising means (27) for supplying solid strands of solidifying material to the receiving inlet (3) of the dispensing head (1), a base member (22) disposed in working proximity to the dispensing outlet (4) of the dispensing head (1), moving means (23) for moving the dispensing head (1) and the base member (22) relative to each other in three dimensions and control means (24) for controlling the moving means (23) and the driving means (7), such that the dispensing head (1) can move relative to the base member (22) in three dimensions in a predetermined sequence and pattern and that the drive means (7) can drive the strands (8) of solid material through the annular passage (2), such that the material is dispensed in roads (32) in a liquified state from the dispensing outlet (4) in a predetermined rate onto the base member, so as to form a three-dimensional product (30) from deposited roads (32), the dispensing head (1) of the FDM apparatus having a flat smear surface (Sm) for varying the width (W) of a deposited road (32) extending around the dispensing outlet (4) substantially transversely to a central axis (A) of the annular passage (2).

4. An apparatus according to claim 3, further comprising a brush (B) located in working proximity of the dispensing head (1), the brush being provided with bristles (Br) extending substantially transversely to the smear surface (Sm).

5. An apparatus according to claim 4, further comprising a cutter (C) placed near the brush (B), the cutter (C) comprising a comb-like structure having narrowing slots (S1) lying in or closely below a plane in which the tops (T) of the bristles (Br) are located.

## Patentansprüche

1. Verfahren zur Herstellung eines dreidimensionalen physischen Objekts (30), wobei Stränge (8) eines sich verfestigenden Materials verflüssigt werden und das verflüssigte Material in einer Aufschichtung ebener Schichten (33) aufgetragen wird, wobei jede Schicht (31) durch Auftragen des verflüssigten Materials in wenigstens einer Bahn (32) aufgebaut wird, wobei sich das Material verfestigt, wobei jede Bahn (32) entlang einer Bahnachse (Ax) innerhalb der Schicht aufgetragen wird und einen Bahnquerschnitt (33) hat, der sich senkrecht zu der Bahnachse (Ax) erstreckt, wobei der Bahnquerschnitt (33) innerhalb des physischen Objekts (30) variiert wird, **dadurch gekennzeichnet, dass** die Breite (W) des Bahnquerschnitts (33) in Richtung parallel zu der Ebene der wenigstens einen Bahn (32) entlang der Bahnachse (Ax) unter Verwendung einer Ausstreichoberfläche (Sm) variiert wird.

2. Verfahren nach Anspruch 1, wobei die Höhe (H) des Bahnquerschnitts in einer Richtung senkrecht zu den Schichten (31) zwischen den Schichten (31) innerhalb des physischen Objekts (30) variiert wird.

3. Vorrichtung (20) zur Herstellung eines dreidimensionalen physischen Objekts (30) durch eine Modellierungstechnik durch Schmelzauftrag (Fused Deposition Modelling - FDM) mit einem Ausgabekopf (1), der einen ringförmigen Durchgang (2), welcher sich von einem Aufnahmeeinlass (3) zur Aufnahme von Strängen (8) von festem Material bis zu einem Ausgabeauslass (4) zum Ausgeben des Materials in einem verflüssigten Zustand verläuft, eine Heizeinrichtung (5), die funktionsmäßig dem ringförmigen Durchgang (2) zugeordnet ist, um eine Verflüssigungszone (Z) zum Verflüssigen von Material in dem ringförmigen Durchgang (2) zu bilden, wobei die Verflüssigungszone zwischen dem Aufnahmeeinlass (3) und dem Ausgabeauslass (4) liegt, und Antriebseinrichtungen (7) aufweist, um Material durch den ringförmigen Durchgang (2) zu fördern, indem die Stränge (8) des festen Materials gegriffen werden, wobei die Vorrichtung weiter eine Einrichtung (27) zum Zuführen von festen Strängen von sich verfestigendem Material zu dem Aufnahmeeinlass (3) des Ausgabekopfes (1), ein Basisteil (22), das in Arbeitsabstand zu dem Ausgabeauslass (4) des Ausgabekopfes angeordnet ist, Bewegungseinrichtungen (23) zum Bewegen des Ausgabekopfes (1) und des Basisteils (22) relativ zueinander in drei Dimensionen und Steuereinrichtungen (24) aufweist, um die Bewegungseinrichtungen (23) und die Antriebseinrichtungen (7) zu steuern, so dass der Ausgabekopf (1) sich in drei Dimensionen in einer vorgegebenen Sequenz und in einem vorgegebenen Muster bewegen kann und die Antriebseinrichtungen (7) die Stränge (8) des festen Materials durch den ringförmigen Durchgang (2) fördern können, so dass das Material in Bahnen (32) in verflüssigtem. Zustand aus dem Ausgabeauslass (4) mit vorgegebener Geschwindigkeit auf das Basisteil aufgetragen wird, um so ein dreidimensionales Produkt (30) aus aufgetragenen Bahnen (32) zu bilden, wobei der Ausgabekopf (1) der FDM-Vorrichtung eine flache Ausstreichoberfläche (Sm) zum Variieren der Breite (W) einer aufgetragenen Bahn (32) aufweist, die sich um den Ausgabeauslass (4) im Wesentlichen quer zu einer Mittelachse (A) des ringförmigen Durchgangs (2) erstreckt.,

4. Vorrichtung nach Anspruch 3, die weiter eine Bürste (B), die in Arbeitsabstand zu dem Ausgabekopf (1) angeordnet ist, aufweist, wobei die Bürste mit Borsten (Br) versehen ist, die im Wesentlichen quer zu der Ausstreichoberfläche (Sm) verlaufen.

5. Vorrichtung nach Anspruch 4, die weiter einen Schneider (C) aufweist, der nahe der Bürste (B) platziert ist, wobei der Schneider (C) eine kammartige Struktur mit sich verengenden Schlitzen (SI) aufweist, die in oder nahe unterhalb einer Ebene liegen, in der die Spitzen (T) der Borsten (Br) liegen.

## Revendications

1. Procédé de fabrication d'un objet physique tridimensionnel (30), dans lequel des brins (8) en matériau de solidification sont liquéfiés et le matériau liquéfié est déposé dans une pile de couches planaires (31), chaque couche (31) étant constituée en déposant le matériau liquéfié dans au moins une voie (32), dans laquelle le matériau se solidifie, chaque voie (32) étant déposée le long d'un axe de voie (Ax) à l'intérieur de la couche, et ayant une coupe transversale de voie (33) s'étendant perpendiculairement à l'axe de voie (Ax), la coupe transversale de voie (33) étant modifiée à l'intérieur de l'objet physique (30),
**caractérisé en ce que** la largeur (W) de la coupe transversale de voie (33) dans une direction parallèle au plan de la au moins une voie (32) est modifiée le long de l'axe de voie (Ax) utilisant une surface enduite (Sm).

2. Procédé selon la revendication 1, dans lequel la hauteur (H) de la coupe transversale de voie dans une direction perpendiculaire aux couches (31) est modifiée entre les couches (31) à l'intérieur de l'objet physique (30).

3. Appareil (20) destiné à fabriquer des objets physiques tridimensionnels (30) par l'intermédiaire de la technique de dépôt de fil en fusion (FDM) comportant une tête de distribution (1) comportant un passage annulaire (2), s'étendant d'une entrée de réception (3) destinée à recevoir des brins (8) en matériau solide jusqu'à une sortie de distribution (4) destinée à distribuer le matériau dans un état liquéfié, des moyens de chauffage (5), associés de manière opérationnelle au passage annulaire (2) pour créer une zone de liquéfaction (Z) pour liquéfaction du matériau dans le passage annulaire (2), situés entre l'entrée de réception (3) et la sortie de distribution (4), et des moyens d'entraînement (7) pour entraîner le matériau à travers le passage annulaire (2) par mise en prise des brins (8) de matériau solide, l'appareil comportant de plus des moyens (27) pour fournir des brins solides en matériau de solidification à l'entrée de réception (3) de la tête de distribution (1), un élément de base (22) situé à proximité de fonctionnement de la sortie de distribution (4) de la tête de distribution (1), des moyens de déplacement (23) pour déplacer la tête de distribution (1) et l'élément de base (22) l'un par rapport à l'autre de manière tridimensionnelle, et des moyens de commande (24) pour commander les moyens de déplacement (23) et les moyens d'entraînement (7), de telle manière que la tête de distribution (1) peut se déplacer par rapport à l'élément de base (22) de manière tridimensionnelle selon des séquences et un modèle prédéterminés, et que les moyens d'entraînement (7) peuvent entraîner les brins (8) en matériau solide à travers le passage annulaire (2), de sorte que le matériau est distribué dans les voies (32) dans un état liquéfié depuis la sortie de distribution (4) à une vitesse prédéterminée sur l'élément de base, pour former un produit tridimensionnel (30) à partir des voies déposées (32), la tête de distribution (1) de l'appareil FDM ayant une surface plate enduite (Sm) pour modifier la largeur (W) d'une voie déposée (32) s'étendant autour de la sortie de distribution (4) sensiblement de manière transversale à l'axe de voie (A) du passage annulaire (2).

4. Appareil selon la revendication 3, comportant encore une brosse (B) située à une proximité de fonctionnement de la tête de distribution (1), la brosse étant munie de poils (Br) s'étendant sensiblement de manière transversale par rapport à la surface enduite (Sm).

5. Appareil selon la revendication 4, comportant de plus un couteau (C) situé à côté de la brosse (B), le couteau (C) ayant une structure en forme de peigne ayant des entailles qui rétrécissent (SI) allongées sur ou juste au-dessous d'un plan dans lequel sont situées les parties supérieures (T) des poils (Br).
